# FASCICULE DE BREVET EUROPEEN

(11) **EP 0 252 012 B1**
(45) Date de publication et mention de la délivrance du brevet: **04.05.1994**
(21) Numéro de dépôt: 87810376.1
(22) Date de dépôt: 30.06.1987
(51) Int. Cl.: G02B 6/44

(54) **Installation pour l'engagement d'un ensemble de fibres optiques dans les rainures d'un jonc et procédé de réglage de la surlongueur des fibres dans les rainures**
Einrichtung für die Einführung einer Vielzahl optischer Fasern in die Nuten eines Profilkörpers und die Einstellmethode ihrer Überlängen in den Nuten
Installation for the engagement of a plurality of optical fibres into the channels of a support member, and adjusting method of their surplus lengths within the channels

(30) Priorité: 03.07.1986 CH 2719/86
(43) Date de publication de la demande: 07.01.1988
(73) Titulaire: Nokia-Maillefer S.A., 1024 Ecublens Canton de Vaud (CH)
(72) Inventeur: Bruggmann, Rémy, CH-1817 Brent (CH); De Boer, Philipp, CH-1260 Nyon (CH)
(74) Mandataire: Tschudi, Lorenz

(56) Documents cités:
- EP-A- 0 033 123
- EP-A- 0 113 973
- EP-A- 0 168 278
- EP-A- 0 170 491
- FR-A- 2 543 309
- GB-A- 2 156 837
- US-A- 4 244 681

## Description

On sait que les fibres optiques doivent être insérées dans des éléments de guidage en matière plastique qui les enrobent et les protègent, ces fibres étant disposées dans les éléments en question avec une certaine surlongueur de manière à éviter qu'elles soient soumises à des efforts risquant de les briser si l'élément subit un effort de traction et par conséquent un allongement lors de sa manutention, notamment lors de sa pose ou sous l'influence des conditions thermiques.

Pour surmonter cette difficulté on a déjà proposé d'utiliser pour l'enrobage et le guidage des fibres ce qu'on appelle un jonc rainuré, c'est-à-dire un support cylindrique présentant des rainures à sa périphérie, ces rainures ayant de préférence une allure hélicoïdale et étant dimensionnées de façon à pouvoir contenir chacune une fibre optique déposée avec surlongueur. Cette surlongueur qui peut atteindre de 0 à 3 0/00 est donnée à la fibre au moment de son introduction dans la rainure par le fait que le jonc est momentanément soumis à un effort de traction qui l'allonge de la valeur désirée. Lorsqu'on relêche le jonc, il se raccourcit ce qui donne à la fibre sa surlongueur.

Toutefois, lorsqu'un jonc rainuré est dévidé d'une bobine, puis entraîné entre deux cabestans qui le soumettent à la traction désirée, il peut arriver que sous l'effet de la tension que l'on donne à la fibre pour la déposer dans la rainure du jonc, la partie située à l'aval du conducteur optique se retire dans la rainure, ce qui conduit à une perte de la surlongueur voulue. Il faut considérer en effet que le coefficient de frottement au contact entre la fibre et le fond des rainures du jonc est extrêmement faible.

Le procédé et la machine décrits dans FR-A-2 543 309 tentent de répondre à ce problème en bloquant momentanément les fibres dans les rainures du jonc en introduisant périodiquement un produit dans les rainures, ce produit étant ensuite congelé afin de bloquer la fibre. Le système décrit ici comporte de nombreux inconvenients; tout d'abord, le blocage de la fibre dans la rainure est ponctuel, ce qui crée des tensions mécaniques locales dans la fibre et tend par conséquent à diminuer à terme ses caractéristiques de transmission; de plus, il est nécessaire d'introduire un produit étranger dans la rainure, puis de le retirer ultérieurement, ce qui nécessite un équipement complexe; d'autre part, l'interaction du produit de blocage avec la fibre peut diminuer les caractéristiques de transmission de celle-ci et enfin, ce système nécessitant des moyens de synchronisation afin de disposer judicieusement le produit de blocage sur le câble, il peut difficilement être adapté à des câbles assemblés selon le type SZ.

Le but de la présente invention est donc de proposer des moyens permettant de bloquer chaque fibre dans sa rainure au moins momentanément afin de l'empêcher d'être tirée en arrière au moment de l'opération d'assemblage et ne comportant pas les inconvénients des systèmes de l'art antérieur.

Dans ce but, la présente invention a pour premier objet une installation pour l'engagement d'un ensemble de fibres optiques dans des rainures longitudinales d'un jonc, caractérisée par deux cabestans d'axes parallèles, capables de conduire un jonc de manière qu'il parcourt en continu et sous une tension élastique fixe un segment rectiligne déterminé, des moyens de support des cabestans et des bobines débitrices des fibres optiques agencés de manière à produire un mouvement de rotation relatif entre l'ensemble des fibres et ledit segment de jonc autour de l'axe de ce dernier, et des moyens voisins du point (C) d'engagement des fibres dans les rainures, pour faire adhérer au moins momentanément et sur toute leur longueur les fibres aux parois des rainures.

Un autre objet de l'invention est un procédé de fabrication d'un conducteur optique comportant un jonc rainuré et un ensemble de fibres optiques logées chacune avec une surlongueur prédéterminée dans une rainure du jonc, procédé selon lequel on soumet en continu un segment du jonc à un effort de traction (T) de manière à lui impartir un allongement élastique et on engage les fibres dans les rainures en un point fixe (C) de ce segment, caractérisé en ce qu'on établit au voisinage du point d'engagement (C) des fibres, un champ électrique apte à donner aux fibres et au jonc des états de ionisation différents et à créer ainsi une force électrostatique permettant de faire adhérer au moins momentanément et sur toute leur longueur les fibres aux parois des rainures.

On va décrire ci-après à titre d'exemple comment l'invention peut être mise en oeuvre pratiquement.

Au dessin annexé,
la fig. 1 est une vue en perspective schématique et coupée d'un conducteur optique,
les fig. 2a et 2b des vues schématiques montrant deux variantes des rainures dans le jonc du conducteur de la fig. 1,
la fig. 3 est une vue schématique de l'ensemble de l'installation prévue pour la mise en oeuvre du procédé, et
la fig. 4 est une vue également schématique à plus grande échelle montrant la disposition d'un bâton ioniseur dans l'installation de la fig. 3.

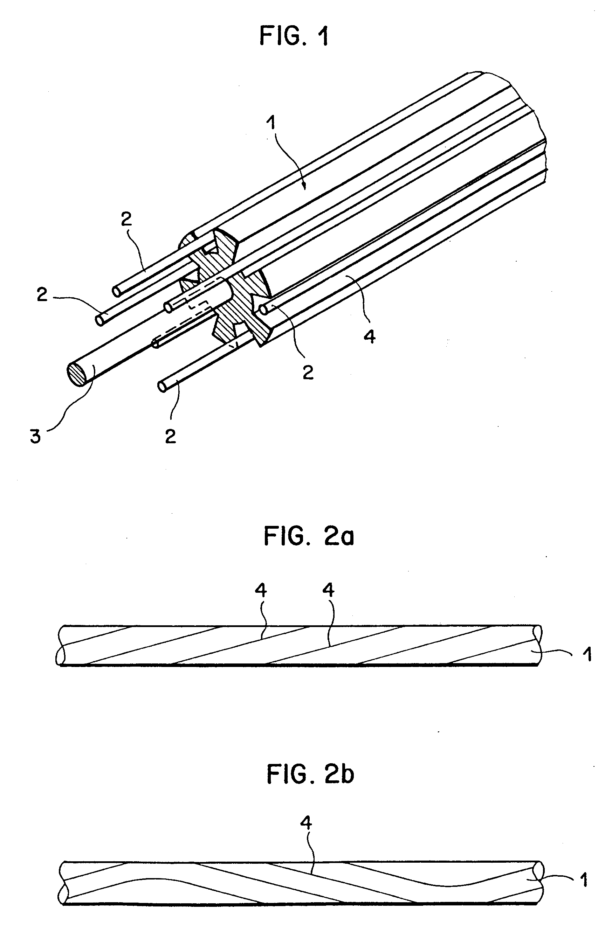

On voit à la fig. 1 un jonc 1 qui est un élément allongé en matière plastique de profil circulaire destiné à contenir six fibres optiques 2 et à les guider en évitant tout effort de traction sur ces fibres. Le jonc 1 possède en son centre un passage cylindrique dans lequel passe un fil central 3. Le jonc 1 présente dans sa surface périphérique six rainures 4 de profil trapézoïdal, destinées à contenir chacune une des fibres 2. Comme on le voit, la section de chaque rainure 4 est nettement plus grande que la section d'une fibre de sorte que cette dernière est libre dans la rainure entre ses parois. Dans le schéma de la fig. 1 les rainures sont parallèles à l'axe du jonc 1, mais de préférence, comme on le voit aux fig. 2a et 2b, on donne aux rainures 4 une allure hélicoïdale. Dans l'exemple de la fig. 2a, les rainures 4 ont un tracé hélicoïdal à pas constant et toutes les rainures sont parallèles.

Dans la variante de la fig. 2b, au contraire le tracé des rainures est périodique, le sens de développement des lignes hélicoïdales autour du jonc étant périodiquement alterné (allure SZ).

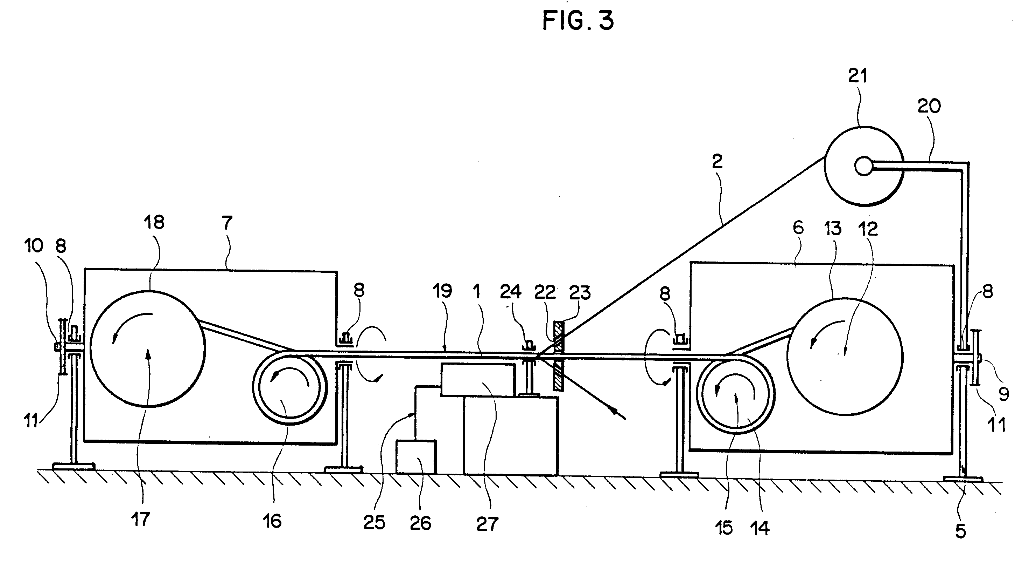

La fig. 3 montre schématiquement une installation pour le mise en oeuvre du procédé. Cette installation comporte un support général 5 dont deux montants supportent une première cage tournante 6, tandis que deux autres montants supportent une seconde cage tournante 7. Ces deux cages tournantes sont supportées par des paliers 8 et tournent autour d'un axe commun. Chaque cage porte à l'extrémité de son arbre de sortie 9 ou 10 une poulie 11 qui permet de l'entraîner en rotation à partir d'un moteur (non représenté). La première cage 6 porte un dévidoir 12 avec une bobine 13 et un cabestan 14 qui tourne autour d'un axe 15 perpendiculaire à l'axe général de l'installation. Le cabestan est entraîné par un moteur (non représenté) monté sur la cage 6. Quant à la cage 7, elle porte de même un cabestan de traction 16 dont l'axe est parallèle à celui du cabestan 14 et qui est également entraîné par un moteur monté dans la cage. Elle porte d'autre part un retireur 17 sur lequel est montée une bobine réceptrice 18. On conçoit que les deux cabestans 14 et 16 peuvent être entraînés par leurs moteurs respectifs à des vitesses qui sont réglées afin que le segment 19 du jonc 1 s'étendant entre les deux cabestans défile de la cage 6 à la cage 7 sous un effort de traction T predéterminé. Cet effort est réglé de manière que le jonc ait un allongement élastique Δ L dans son segment situé entre les deux cabestans, alors que la distance réelle entre ceux-ci est L. D'autre part, les deux cages 6 et 7 peuvent être entraînées en rotation autour de l'axe général de l'installation à une allure et à une vitesse qui correspondent à l'agencement des rainures hélicoïdales 4. Dans le cas où le jonc 1 présente des rainures 4 ayant un pas constant (fig. 2a), alors la vitesse des cages 6 et 7 sera constante et synchronisée avec celle des cabestans en fonction du pas des rainures.

La machine représentée à la fig. 3 fabrique des câbles du type représenté à la fig. 2a. Dans une autre forme d'exécution correspondant aussi à la solution de la fig. 2a, l'ensemble du dispostif d'alimentation, capable de guider les fibres et qui sera décrit ci-après, pourrait aussi être monté tournant autour de l'axe général, le retireur 17 étant alors monté sur un axe d'orientation stationnaire.

Cependant, on peut aussi concevoir que le dispositif d'alimentation et le retireur soient montés sur des axes d'orientation stationnaire. La machine comprend alors une cage intermédiaire avec les deux cabestans 14 et 16, entraînés en rotation périodiquement dans un sens et dans l'autre. Cette variante est apte à fabriquer un câble du type représenté à la fig. 2b. Une telle assembleuse SZ peut aussi être pourvue du perfectionnement qui constitue l'objet principal de la présente invention.

On décrit maintenant le dispositif d'alimentation. Le support général 5 comporte autour de la cage 6 une série de porte-bobines 20 dont un est représenté à la fig. 3. Ces porte-bobines sont équipés chacun d'une bobine 21 portant une fibre optique 2. A partir des bobines 21, les fibres 2 sont tirées en direction du jonc. Elles passent à travers un trou de guidage 22 ménagé dans un diaphragme de guidage 23 que traverse également le jonc 1, tandis que le point (C) d'engagement des fibres dans les rainures est déterminé par une filière 24.

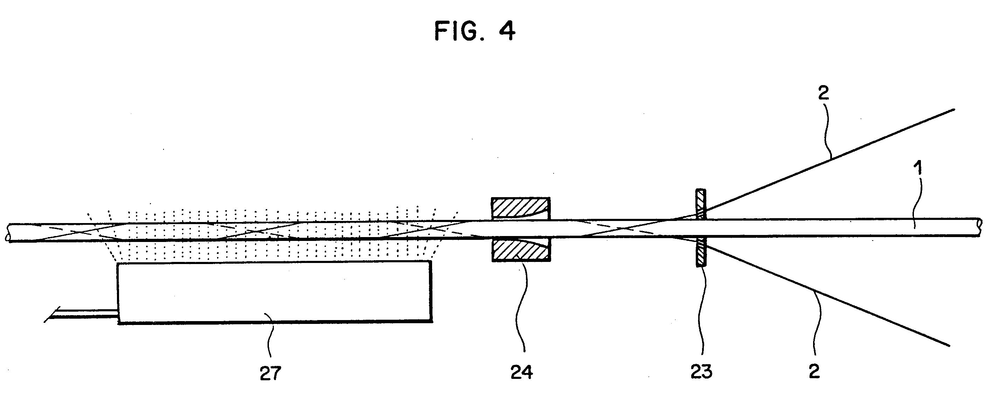

Comme on l'a dit plus haut, il est nécessaire que le segment de chaque fibre 2 compris entre la filière 24 et la bobine 21 ait une allure rectiligne de sorte que la fibre doit nécessairement être soumise à un effort de traction qui lui confère un allongement minime mais néanmoins différent de zéro, effort que l'on appellera ci-après (F). Toutefois, pour que cette tension existe, il est évidemment nécessaire que la fibre soit soumise dans la partie du jonc qui passe dans le cabestan 16 et sur la bobine 18, à une force de retenue qui ne peut lui être transmise que par les parois de la rainure 4 dans laquelle elle est engagée. Or on a constaté que le coefficient de frottement entre la fibre et la matière plastique du jonc 1 est extraordinairement faible. En fait, dans la pratique, l'établissement de cette traction (F) présente une difficulté. Pour surmonter cette difficulté, l'installation décrite comporte en regard du segment de jonc 1 situé immédiatement en aval de la filière 24 un dispositif ioniseur désigné de façon générale par 25. Ce dispositif ioniseur peut être réalisé de différentes manières. Il peut comporter notamment un générateur électrostatique 26 et une barre de charge 27 constituée d'une masse cylindrique allongée, isolée par rapport à la terre, et qui est maintenue par le générateur 26 sous une tension électrostatique prédéterminée. La fig. 4 montre plus en détail l'action de la barre de charge 27. Elle crée dans son environnement et notamment dans la zone traversée par le jonc 1 un champ électrique puissant. Ce dernier a pour effet de provoquer des phénomènes d'ionisation qui placent les fibres et le jonc dans des états de charge différents, dus aux différences de propriétés des matières en présence. Cette situation a pour résultat que chaque fibre 2 est collée dans la rainure dans laquelle elle est introduite. L'adhérence ainsi établie résiste à une force d'une certaine valeur, ce qui crée la résistance désirée. Ainsi il est possible de tendre les fibres 2 entre les dévidoirs 21 et la filière 24 sous la force (F) et d'assurer ainsi une introduction correcte de ces fibres dans les rainures. Comme le jonc 1 est allongé élastiquement sous l'effet de la force (T) lorsqu'il passe entre les cabestans 14 et 16 et perd son allongement dès qu'il quitte le cabestan 16 pour se diriger vers la bobine 18, il subit à cet endroit un raccourcissement, ce qui donne aux fibres 2 la surlongueur désirée. La charge électrostatique provoquée par le phénomène d'ionisation dans le champ électrique de la barre 27 disparait au bout d'un certain temps et ne laisse aucune trace dans le câble terminé.

On conçoit que, dans le cas d'un rainurage hélicoïdal à pas constant, les bobines débitrice 13 et réceptrice 18 doivent nécessairement étre montées sur les cages rotatives 6 et 7, et que la fabrication du conducteur optique ne peut se faire que par segments de longueur déterminée. En revanche, dans le cas d'un jonc à rainurage SZ, les bobines 13 et 18 peuvent être installées sur le support 5 en dehors des cages, ce qui permet de réaliser d'un seul tenant des éléments de conducteur optique de très grande longueur. Dans ces deux formes d'application, la présence d'un générateur électrostatique et d'un ioniseur à proximité du point d'engagement des fibres dans les rainures a permis d'améliorer de façon sensible les qualités des conducteurs optiques et notamment l'obtention d'un conducteur dans lequel les fibres ont effectivement une surlongueur prédéterminée. Cette surlongueur supprime les effets négatifs que l'on observait auparavant sur les propriétés optiques des conducteurs à fibre optique, pendant toute la durée de vie d'un câble et diminue le risque de rupture des libres lors de la manutention des câbles. L'agencement décrit permet d'augmenter la vitesse de délilement du jonc et des fibres, et par conséquent la rentabilité de l'installation.

## Revendications

1. Installation pour l'engagement d'un ensemble de fibres optiques (2) dans des rainures longitudinales (4) d'un jonc (1), caractérisée par deux cabestans (14, 16) d'axes parallèles, capables de conduire un jonc de manière qu'il parcourt en continu et sous une tension élastique fixe un segment rectiligne (19) déterminé, des moyens de support des cabestans (5, 6, 7) et des bobines (21) débitrices des fibres optiques (2) agencés de manière à produire un mouvement de rotation relatif entre l'ensemble des fibres (2) et le dit segment de jonc (19) autour de l'axe de ce dernier, et des moyens voisins du point (C) d'engagement des fibres dans les, rainures, pour faire adhérer au moins momentanément et sur toute leur longueur les fibres aux parois des rainures.

2. Installation selon la revendication 1, caractérisée en ce qu'elle comporte un support (6, 7) capable de tourner autour d'un axe et portant les deux cabestans espacés l'un de l'autre, et des moyens pour entraîner ces cabestans en rotation chacun autour de son axe et à des vitesses réglées en phase et en grandeur de manière que le segment du jonc déplacé par les cabestans soit soumis entre ces derniers à un effort de traction prédéterminé, les moyens pour faire adhérer les libres optiques dans les rainures du jonc étant situés à l'aval du point d'engagement (C).

3. Installation selon la revendication 1, caractérisée par un dispositif ioniseur disposé entre les cabestans, au voisinage du jonc, comme moyen pour faire adhérer les fibres aux parois des rainures.

4. Installation selon la revendication 3, caractérisée en ce que le dispositif de ionisation comporte au voisinage du jonc un bâton de charge électrostatique connecté à un générateur électroastique de tension.

5. Procédé de fabrication d'un conducteur optique comportant un jonc rainuré et un ensemble de fibres optiques logées chacune avec une surlongueur prédéterminée dans une rainure du jonc, procédé selon lequel on soumet en continu un segment du jonc à un effort de traction (T) de manière à lui impartir un allongement élastique et on engage les libres dans les rainures en un point fixe (C) de ce segment, caractérisé en ce qu'on établit au voisinage du point d'engagement (C) des fibres, un champ électrique apte à donner aux fibres et au jonc des états de ionisation différents et à créer ainsi une force électrostatique permettant de faire adhérer au moins momentanément et sur toute leur longueur les fibres aux parois des rainures.

6. Procédé de fabrication selon la revendication 5, caractérisé en ce que lors de leur engagement dans les rainures les fibres sont elles-mêmes soumises à un effort de traction (F), celui-ci leur conférant un allongement plus petit que celui découlant de l'effort (T) exercé sur le jonc.

7. Procédé selon la revendication 5 ou la revendication 6, caractérisé en ce qu'on fait passer le jonc sur deux cabestans dont les rotations sont synchronisées en vitesse et en phase de manière à entraîner le jonc le long dudit segment entre les cabestans à une vitesse prédéterminée et sous la dite tension (T).

8. Procédé selon l'une des revendications 5 à 7, dans lequel on utilise un jonc dont les rainures ont une allure hélicoïdale, caractérisé en ce qu'on imprime au jonc un mouvement de rotation autour de l'axe rectiligne du segment.

9. Procédé selon la revendication 8, caractérisé en ce que le mouvement de rotation est continu à vitesse constante, les rainures du jonc étant disposées en hélice à pas constant.

10. Procédé selon la revendication 8, caractérisé en ce que le sens du mouvement de rotation du jonc est alterné périodiquement, les rainures ayant une forme hélicoïdale à sens alterné (SZ).

## Claims

1. Installation for the engagement of an assembly of optical fibres (2) into longitudinal grooves (4) of a rod (1), characterized by two capstans (14, 16) having parallel axes, capable of conducting a rod in a manner so that it moves continuously and under a fixed elastic tension along a predetermined straight section of path (19), capstan-supporting means (5, 6, 7) and optical-fibre payout reels (21) for producing a relative rotary movement about the axis of said rod between said fibres as a whole (2) and the said section of rod (19) and means, adjacent to the point of entry (C) of the fibers into the grooves, for causing the fibres to adhere at least momentarily and along their entire length to the walls of the grooves.

2. Installation according to claim 1, characterized in that it includes a support (6, 7) rotatable about an axis and bearing the two capstans spaced from one another, and means for driving the capstans rotatingly, each about its own axis and at speeds regulated in phase and in magnitude, whereby the section of rod moved by the capstans is subjected between the latter to a predetermined tensile stress, the means for causing the fibres to adhere in the grooves of the rod being situated downstream from the point of entry (C).

3. Installation according to claim 1, characterized by an ionizer device disposed between the capstan, in proximity to said rods, as means for causing the fibres to adhere to the walls of the grooves.

4. Installation according to claim 3, characterized in that the ionizer device comprises in proximity to the rod an electrostatic charge bar connected to an electrostatic voltage generator.

5. A method of producing an optical conductor having a grooved rod and an assembly of optical fibres, each accommodated with a predetermined excess length in one groove of the rod, method according to which a segment of the rod is continuously subjected to a tensile stress (T) to impart to it an elastic elongation, and the fibers are fitted into the grooves at a fixed point (C) of this section, characterized in that one establishes adjacent to the point of entry (C) of the fibres an electric field suitable for imparting to the fibres and to the rod different states of ionization and thus creating an electrostatic force permitting the fibres to adhere at least momentarily and along their entire length to the walls of the grooves.

6. Method according to claim 5 characterized in that at the time of being fitted in the grooves the fibres are submitted to a tensile stress (F) which confers upon the fibres an elongation smaller than that deriving from the stress (T) exerted upon the rod.

7. Method according to claim 5 or claim 6, characterized in that the rod is passed over two capstans, the rotation of the capstans being synchronized in speed and in phase for driving the rod along the predetermined section between the capstans at a predetermined speed and under the said stress (T).

8. Method according to one of the claims 5 to 7 in which a rod is used whose grooves have a helical course characterized in that the rod is rotated about the straight axis of the section.

9. Method according to claim 8 characterized in that the rotation takes place continuously and at a constant speed, the grooves being disposed along spirals of uniform pitch.

10. Method according to claim 8 characterized in that the direction of rotation is periodically alternated, the grooves being disposed along spirals of alternating direction (SZ).

## Patentansprüche

1. Einrichtung für die Einführung einer Vielzahl von Lichtleitfasern (2) in längsgerichtete Nuten (4) eines Profilkörpers (1), gekennzeichnet durch zwei Winden (14, 16) mit parallelen Achsen, die einen Profilkörper derart führen können, dass er einen bestimmten geraden Abschnitt (19) kontinuierlich und unter einer festgelegten elastischen Spannung durchläuft, Mittel (5, 6, 7) zum Halten der Winden und der Ablaufspulen (21) der Lichtleitfasern (2), die so angeordnet sind, dass sie eine relative Drehbewegung zwischen der Gruppe der Fasern (2) und dem Profilkörperabschnitt (19) um die Achse des letzteren bewirken, und an den Punkt (C) der Einführung der Fasern in die Nuten angrenzende Mittel, um die Fasern wenigstens vorübergehend und über ihre gesamte Länge an den Wänden der Nuten haften zu lassen.

2. Einrichtung nach Anspruch 1, dadurch gekennzeichnet, dass sie eine Haltevorrichtung (6, 7), die sich um eine Achse drehen lässt und die zwei voneinander beabstandete Winden trägt, umfasst sowie Mittel zum Antreiben dieser Winden zur Drehung um ihre jeweiligen Achsen mit Geschwindigkeiten, die in Phase und Grösse so geregelt sind, dass der von den Winden bewegte Profilkörperabschnitt zwischen diesen letzteren einer bestimmten Zugkraft ausgesetzt ist, wobei sich die Mittel, die dazu dienen, die Lichtleitfasern in den Nuten der Profilkörper haften zu lassen, stromabwärts des Einführungspunktes (C) befinden.

3. Einrichtung nach Anspruch 1, gekennzeichnet durch eine zwischen den Winden und nahe dem Profilkörper angeordnete Ionisator-Vorrichtung als Mittel, um die Fasern an den Wänden der Nuten haften zu lassen.

4. Einrichtung nach Anspruch 3, dadurch gekennzeichnet, dass die Ionisationsvorrichtung in der Nähe des Profilkörpers einen Stab mit elektrostatischer Ladung, der an einen elektrostatischen Spannungsgenerator angeschlossen ist, umfasst.

5. Verfahren zur Herstellung eines Lichtleiters, der einen mit Nuten versehenen Profilkörper und eine Vielzahl von Lichtleitfasern, die jeweils mit einer festgelegten Überlänge in einer Nut des Profilkörpers angeordnet sind, umfasst, ein Verfahren, gemäss dem man einen Abschnitt des Profilkörpers kontinuierlich einer Zugkraft (T) aussetzt, so dass diesem eine elastische Dehnung erteilt wird, und man die Fasern an einem festen Punkt (C) dieses Abschnitts in die Nuten einführt, dadurch gekennzeichnet, dass man nahe dem Einführungspunkt (C) der Fasern ein elektrisches Feld aufbaut, das den Fasern und dem Profilkörper verschiedene Ionisationszustände verleiht und auf diese Weise eine elektrostatischen Kraft erzeugt, die es ermöglicht, die Fasern wenigstens vorübergehend und über ihre gesamte Länge an den Wänden der Nuten haften zu lassen.

6. Herstellungsverfahren nach Anspruch 5, dadurch gekennzeichnet, dass die Fasern bei ihrer Einführung in die Nuten ihrerseits einer Zugkraft (F) ausgesetzt werden, wobei diese ihnen eine Dehnung erteilt, die geringer ist als diejenige, welche von der auf den Profilkörper ausgeübten Kraft (T) herrührt.

7. Verfahren nach Anspruch 5 oder Anspruch 6, dadurch gekennzeichnet, dass man den Profilkörper über zwei Winden laufen lässt, deren Drehungen in Geschwindigkeit und Phase synchronisiert sind, so dass der Profilkörper längs dieses Abschnitts zwischen den Winden mit einer festgelegten Geschwindigkeit und unter der genannten Zugspannung (T) angetrieben wird.

8. Verfahren nach einem der Ansprüche 5 bis 7, bei dem man einen Profilkörper verwendet, dessen Nuten einen spiralförmigen Verlauf haben, dadurch gekennzeichnet, dass man den Profilkörper in eine Drehbewegung um die gerade Achse des Abschnitts versetzt.

9. Verfahren nach Anspruch 8, dadurch gekennzeichnet, dass die Drehbewegung kontinuierlich mit einer konstanten Geschwindigkeit erfolgt, wobei die Nuten des Profilkörpers in einer Schraubenlinie mit gleichbleibender Ganghöhe angeordnet sind.

10. Verfahren nach Anspruch 8, dadurch gekennzeichnet, dass die Richtung der Drehbewegung des Profilkörpers periodisch gewechselt wird, wobei die Nuten die Form einer Spirale mit wechselnder Richtung (SZ) besitzen.
